# EUROPÄISCHE PATENTSCHRIFT

(11) **EP 3 656 615 B1**
(45) Veröffentlichungstag und Bekanntmachung des Hinweises auf die Patenterteilung: **10.03.2021**
(21) Anmeldenummer: 18208335.2
(22) Anmeldetag: 26.11.2018
(51) Int. Cl.: B60R 19/48

(54) **SENSORAUFNAHME ZUM AUFNEHMEN EINES SENSORS EINES KRAFTFAHRZEUGS SOWIE VERKLEIDUNGSBAUTEIL EINES KRAFTFAHRZEUGS MIT EINER DERARTIGEN SENSORAUFNAHME**
SENSOR MOUNTING FOR A SENSOR OF A MOTOR VEHICLE AND CLADDING COMPONENT OF A MOTOR VEHICLE WITH SUCH A SENSOR MOUNTING
LOGEMENT DE CAPTEUR DESTINÉ À LOGER UN CAPTEUR D'UN VÉHICULE AUTOMOBILE AINSI QUE COMPOSANT D'HABILLAGE D'UN VÉHICULE AUTOMOBILE DOTÉ D'UN TEL LOGEMENT DE CAPTEUR

(43) Veröffentlichungstag der Anmeldung: 27.05.2020
(73) Patentinhaber: Motherson Innovations Company Limited, London, Greater London EC3A 6AP (GB)
(72) Erfinder: Walz, Jochen, 79356 Eichstetten (DE)
(74) Vertreter: Westphal, Mussgnug & Partner Patentanwälte mbB

(56) Entgegenhaltungen:
- WO-A1-99/10876
- WO-A1-2009/144545
- WO-A1-2010/100225
- WO-A1-2013/161221
- DE-A1- 10 031 111
- FR-A1- 2 978 400

## Beschreibung

Die vorliegende Erfindung betrifft eine Sensoraufnahme zum Aufnehmen eines Sensors eines Kraftfahrzeugs. Weiterhin betrifft die Erfindung ein Verkleidungsbauteil eines Kraftfahrzeugs mit einer derartigen Sensoraufnahme.

Viele Kraftfahrzeuge weisen Assistenzsysteme auf, welche den Fahrer im Betrieb des Kraftfahrzeugs unterstützen. Ein Beispiel derartiger Assistenzsysteme sind Einparkhilfen (PDC: Park Distance Control), bei denen der Fahrer beim Einparken eine optische und/oder akustische Mitteilung über den verbleibenden Abstand zu einem Gegenstand in der Nähe des Kraftfahrzeugs bekommt, wodurch der Fahrer einen Aufprall mit dem Gegenstand und somit eine Beschädigung des Kraftfahrzeugs und des Gegenstands verhindern und gleichzeitig den zur Verfügung stehenden Parkraum bestmöglich ausnutzen kann. Ein weiteres Beispiel sind Parklenkassistenten (PLA), bei denen das Kraftfahrzeug automatisch in Längs- und Querparklücken gesteuert wird. Parklenkassistenten sind zudem in der Lage, das Kraftfahrzeug aus Längsparklücken auszuparken. Parklenkassistenten unterstützen den Fahrer, indem sie selbsttätig die optimalen Lenkradbewegungen durchführen, um auf der Ideallinie ein- und auszuparken. Die Vermessung der Parklücke, die Zuweisung der Startposition und die Lenkbewegungen übernimmt der Parklenkassistent automatisch. Der Fahrer muss nur noch Gas geben und bremsen.

Die Funktionen dieser Assistenzsysteme basieren auf Daten, die von entsprechend ausgebildeten Sensoren, beispielsweise Radar- und/oder Ultraschallsensoren, erfasst werden. Diese Sensoren sind in oder an den Verkleidungsbauteilen des Kraftfahrzeugs angeordnet, insbesondere im Stoßfänger und in der Seitenverkleidung des Kraftfahrzeugs. Je nachdem, über welche Assistenzsysteme das Kraftfahrzeug verfügt, sind unterschiedlich viele Sensoren notwendig. Typischerweise verfügen die Kraftfahrzeuge allein im Stoßfänger über zwischen vier und sechs Sensoren. Die Genauigkeit der Assistenzsysteme und damit ihre Zuverlässigkeit hängen in besonderem Maße von der exakten Position und Ausrichtung eines jeden Sensors in Bezug auf die Verkleidungsbauteile und die übrigen Sensoren ab.

Verkleidungsbauteile, an denen derartigen Sensoren befestigt sind, sind aus der DE 197 19 519 A1, der WO 2012/055713 A1, der WO 2013/091774 A1, der WO 2010/100225 A1, der DE 100 31 111 A1 und der EP 3 118 065 A1 bekannt. Dabei offenbart die WO 2010/100225 A1 eine Sensoraufnahme nach dem Oberbegriff des Anspruchs 1. Bei der EP 3 118 065 A1 wird die Sensoraufnahme unter Verwendung eines Füll- und Befestigungsmittels am Verkleidungsbauteil befestigt. Mit dem Füll- und Befestigungsmittel wird die Sensoraufnahme unter Ausbildung eines Freiraums am Verkleidungsbauteil beabstandet von diesem befestigt, wobei das Füll- und Befestigungsmittel den Freiraum ausfüllt. Hierdurch ist es möglich, die Sensoraufnahme und folglich den darin aufgenommenen Sensor auch im Bereich von Wölbungen des Verkleidungsbauteils mit der notwendigen Ausrichtung zu befestigen, ohne dass an die Wölbung angepasste stellenspezifische Fügeflansche verwendet werden müssen. Hierdurch kann der fertigungstechnische und logistische Aufwand deutlich reduziert werden.

Üblicherweise weist die Sensoraufnahme einen von einer Wandung gebildeten Hohlraum auf, in welchen der Sensor einbringbar ist, wo der Sensor beispielsweise mittels eines Formschlusses an der Sensoraufnahme befestigt ist. Je nach verwendetem Füll- und Befestigungsmittel ist dieses zu Beginn des Verbindungsprozesses flüssig und härtet während des Verbindungsprozesses aus, wodurch die entsprechende Befestigung der Sensoraufnahme am Verkleidungsbauteil bewirkt wird. Wie erwähnt, wird in der EP 3 118 065 A1 die Sensoraufnahme unter Ausbildung eines Freiraums am Verkleidungsbauteil beabstandet von diesem befestigt, wobei das Füll- und Befestigungsmittel den Freiraum ausfüllt. Es hat sich aber gezeigt, dass ein Teil des noch flüssigen Füll- und Befestigungsmittels in den Hohlraum gelangen kann. Der im Hohlraum ausgehärtete Teil des Füll- und Befestigungsmittels kann im ungünstigen Fall die Funktion des Sensors beeinträchtigen. Zudem ist die Verteilung des Füll- und Befestigungsmittels nicht immer derart, dass die geforderten Abzugskräfte erreicht werden.

Aufgabe einer Ausführungsform der vorliegenden Erfindung ist es, eine Sensoraufnahme bereitzustellen, welche sich auf zuverlässiger und einfacher Weise mit dem Verkleidungsbauteil verbinden lässt. Des Weiteren liegt einer Ausgestaltung der vorliegenden Erfindung die Aufgabe zugrunde, ein Verkleidungsbauteil anzugeben, an dem eine derartige Sensoraufnahme derart befestigt ist, dass die an die Befestigung gestellten Anforderungen erfüllt werden können. Insbesondere soll die Befestigung derart ausgeführt werden, dass die geforderten Abzugskräfte zuverlässig erreicht werden und dass auch für den Fall, dass die Sensoraufnahme im Bereich von Wölbungen am Verkleidungsbauteil befestigt werden sollen, kein Füll- und Befestigungsmittel in den Hohlraum der Sensoraufnahme eindringt.

Diese Aufgabe wird mit den in den Ansprüchen 1 und 9 angegebenen Merkmalen gelöst. Vorteilhafte Ausführungsformen sind Gegenstand der Unteransprüche.

Eine Ausführungsform der Erfindung betrifft eine Sensoraufnahme zum Aufnehmen eines Sensors eines Kraftfahrzeugs, umfassend
- eine Wandung, welche einen Hohlraum mit einer ersten Öffnung und einer zweiten Öffnung umschließt und welche eine Längsachse definiert, wobei
   der Sensor mittels einer Bewegung entlang der Längsachse durch die erste Öffnung und/oder durch die zweite Öffnung in den Hohlraum einbringbar ist,
- einen im Bereich der ersten Öffnung angeordneten Fügeflansch, mit welchem die Sensoraufnahme mit einem Verkleidungsbauteil des Kraftfahrzeugs unter Ausbildung eines Freiraums zwischen der Sensoraufnahme und dem Verkleidungsbauteil verbindbar ist, wobei
   die Sensoraufnahme mittels eines den Freiraum ausfüllenden Füll- und Befestigungsmittels mit dem Verkleidungsbauteil verbindbar ist, und
- einen am Fügeflansch angeordneten und sich entlang der Längsachse erstreckenden Vorsprung, wobei
- der Fügeflansch und der Vorsprung derart ausgebildet sind, dass das Füll- und Befestigungsmittel beim Verbinden der Sensoraufnahme mit dem Verkleidungsbauteil vom Hohlraum weg verdrängt wird.

Die in der EP 3 118 065 A1 offenbarten Sensoraufnahmen weisen teilweise Fügeflansche auf, die aber nicht mit sich entlang der Längsachse erstreckenden Vorsprüngen versehen sind. Im Gegensatz dazu weisen die vorschlagsgemäßen Sensoraufnahmen derartige Vorsprünge auf, welche auf den Fügeflanschen angeordnet sind und wie eine Art Strömungsrichter wirken. Folglich verdrängen die Vorsprünge das flüssige Füll- und Befestigungsmittel beim Verbinden der Sensoraufnahme mit dem Verkleidungsbauteil vom Hohlraum weg. Es wird verhindert, dass das Füll- und Befestigungsmittel in den Hohlraum gelangt und dort die Funktionsfähigkeit der Sensoren beeinträchtigen kann. Zumindest wird aber die Menge des Füll- und Befestigungsmittels, welche in den Hohlraum gelangt, gegenüber den in der EP 3 118 065 A1 offenbarten Sensoraufnahmen soweit reduziert, dass das in den Hohlraum gelangte und dort ausgehärtete Füll- und Befestigungsmittel die Funktion des Sensors nicht stören kann.

Erfindungsgemäß weist der Fügeflansch eine zur ersten Öffnung hinweisende Stirnfläche auf, welche um einen Stirnflächenwinkel gegenüber einer senkrecht zur Längsachse verlaufenden Ebene geneigt ist, wobei der Stirnflächenwinkel von der ersten Öffnung weg weist und zwischen 1° und 7° und insbesondere zwischen 3° und 5° beträgt. Das Merkmal, wonach der Stirnflächenwinkel von der ersten Öffnung weg weist, bewirkt, dass der axiale Abstand der Stirnfläche zur ersten Öffnung radial nach außen zunimmt. Die Neigung der Stirnfläche des Fügeflansches hält das Füll- und Befestigungsmittel fern vom Hohlraum der Sensoraufnahme. Es hat sich gezeigt, dass im angegebenen Bereich des Stirnflächenwinkels ein Eindringen des Füll- und Befestigungsmittels in den Hohlraum besonders wirkungsvoll vermieden werden kann. Üblicherweise wird beim Befestigen der Sensoraufnahme am Verkleidungsbauteil zunächst das Füll- und Befestigungsmittel auf das Verkleidungsbauteil aufgetragen und anschließend die Sensoraufnahme mit einer Bewegung entlang der Längsachse der Sensoraufnahme auf das Füll- und Befestigungsmittel gedrückt. Diese axiale Bewegung bewirkt aufgrund der Neigung der Stirnfläche des Fügeflansches eine Verdrängung des Füll- und Befestigungsmittels radial nach außen. Gleichzeitig wird das Füll- und Befestigungsmittel so verteilt, dass eine besonders große Fügefläche entsteht, wodurch die so erzeugte Verbindung hohe Abzugskräfte bereitstellt.

Erfindungsgemäß ist vorgesehen, dass der Fügeflansch eine Außenfläche aufweist, welche gegenüber der Längsachse um einen Außenflächenwinkel geneigt ist, wobei der Außenflächenwinkel zwischen 1° und 5° beträgt und eine Verjüngung des Fügeflansches zur ersten Öffnung hin bewirkt. Es hat sich herausgestellt, dass ein derartiger Außenflächenwinkel ebenfalls eine besonders gleichmäßige Verteilung des Füll- und Befestigungsmittels bewirkt, so dass die so erzeugte Verbindung hohe Abzugskräfte bereitstellt.

Nach Maßgabe einer weiteren Ausführungsform bildet die Wandung eine Innenfläche, wobei und der Fügeflansch mit der Innenfläche fluchtet. Der Sensor kann sehr weit in die Sensoraufnahme bis zur ersten Öffnung eingebracht und von der Innenfläche geführt werden. Die Sensoren müssen nicht auf vom Fügeflansch verursachte Querschnittsänderungen des Hohlraums angepasst werden.

In einer weitergebildeten Ausführungsform kann der Vorsprung mit der Innenfläche fluchten. Auch in dieser Ausführungsform kann der Sensor sehr weit in die Sensoraufnahme bis zur ersten Öffnung eingebracht werden, wobei er von der Innenfläche geführt wird. Die Sensoren müssen nicht auf vom Vorsprung verursachte Querschnittsänderungen des Hohlraums angepasst werden.

Bei einer weitergebildeten Ausführungsform können der Fügeflansch und der Vorsprung umlaufend ausgebildet sein. Der Fügeflansch und der Vorsprung sind daher unterbrechungsfrei ausgebildet. Hierdurch werden einerseits die Fügefläche zwischen dem Verkleidungsbauteil und der Sensoraufnahme erhöht und andererseits besonders effektiv das Eindringen des Füll- und Befestigungsmittels verhindert. Darüber hinaus kann die Sensoraufnahme unabhängig von seiner Drehstellung am Verkleidungsbauteil befestigt werden.

Bei einer weiteren Ausführungsform können der Fügeflansch und der Vorsprung einteilig mit der Wandung ausgebildet sein. Der Fügeflansch und der Vorsprung werden in dieser Ausführungsform von der Wandung gebildet, so dass die gesamte Sensoraufnahme in einem Herstellungsprozess gefertigt werden kann. Fügeschritte zum Verbinden des Fügeflansches mit der Wandung und zum Verbinden des Vorsprungs mit dem Fügeflansch entfallen.

Eine weitergebildete Ausführungsform zeichnet sich dadurch aus, dass der Vorsprung mit einer Axialdistanz vom Fügeflansch hervorsteht, welche zwischen 0,05 mm und 0,5 mm beträgt. Es hat sich herausgestellt, dass bei der üblicherweise verwendeten Größe des Freiraums oder beim maximal umsetzbaren Abstand zwischen der Sensoraufnahme und des Verkleidungsbauteils eine derartige Axialdistanz besonders wirkungsvoll das Eindringen des Füll- und Befestigungsmittels in den Hohlraum der Sensoraufnahme verhindert.

Nach Maßgabe einer weiteren Ausführungsform erstreckt sich der Vorsprung ausgehend von der Innenfläche um eine Radialdistanz, welche zwischen 0,3 mm und 0,7 mm beträgt. Es hat sich herausgestellt, dass bei der üblicherweise verwendeten Größe des Freiraums oder beim maximal umsetzbaren Abstand zwischen der Sensoraufnahme und des Verkleidungsbauteils eine derartige Radialdistanz besonders wirkungsvoll das Eindringen des Füll- und Befestigungsmittels in den Hohlraum der Sensoraufnahme verhindert.

Nach Maßgabe einer weiteren Ausführungsform ist die Sensoraufnahme aus einem Kunststoff gefertigt, welcher für elektromagnetische Strahlung einer Wellenlänge zwischen 350 nm und 450 nm durchlässig ist. Bei einigen der üblicherweise zum Befestigen der Sensoraufnahme am Verkleidungsbauteil verwendeten Füll- und Befestigungsmitteln kann die Aushärtung mit der in der elektromagnetischen Strahlung enthaltenen Strahlungsenergie ausgelöst werden. Hierdurch lässt sich der Fertigungsprozess einfach gestalten, da die zum Erzeugen der elektromagnetischen Strahlung benötigte Strahlenquelle genau dann eingeschaltet werden kann, wenn die Sensoraufnahme in der gewünschten Position gegenüber dem Verkleidungsbauteil befindet und die gewünschte Ausrichtung erreicht hat. Dadurch, dass die Sensoraufnahme für elektromagnetische Strahlung einer Wellenlänge zwischen 350 nm und 450 nm durchlässig ist, wird erreicht, dass die elektromagnetische Strahlung einen Großteil der Oberfläche des Füll- und Befestigungsmittels erreichen kann und es nicht zu einer partiellen Abschattung kommt, in welcher das Füll- und Befestigungsmittel nur verzögert aushärtet. Die Wellenlänge von zwischen 350 nm und 450 nm erzeugt für das menschliche Auge sichtbares Licht mit einer violett-blauen Farbe. Hierdurch kann einerseits die Funktionsfähigkeit der Strahlenquelle ohne weiteres festgestellt werden, andererseits enthält die elektromagnetische Strahlung in diesem Wellenlängenbereich ausreichend Strahlungsenergie, um das Aushärten des Füll- und Befestigungsmittels auszulösen.

Eine Ausbildung der Erfindung betrifft ein Verkleidungsbauteil eines Kraftfahrzeugs, umfassend
- eine oder mehrere Durchgangsöffnungen,
- eine oder mehrere Sensoraufnahmen zum Aufnehmen eines Sensors (22) des Kraftfahrzeugs (34) umfassend
   ∘ eine Wandung (12), welche einen Hohlraum (14) mit einer ersten Öffnung (16) und einer zweiten Öffnung (18) umschließt und welche eine Längsachse (L) definiert, wobei
      der Sensor (22) mittels einer Bewegung entlang der Längsachse (L) durch die erste Öffnung (16) und/oder durch die zweite Öffnung (18) in den Hohlraum (14) einbringbar ist,
   ∘ einen im Bereich der ersten Öffnung (16) angeordneten Fügeflansch (24), mit welchem die Sensoraufnahme (10) mit einem Verkleidungsbauteil (32) des Kraftfahrzeugs (34) unter Ausbildung eines Freiraums (44) zwischen der Sensoraufnahme (10) und dem Verkleidungsbauteil (32) verbunden ist, wobei die Sensoraufnahme (10) mittels eines den Freiraum (44) ausfüllenden Füll- und Befestigungsmittels (42) mit dem Verkleidungsbauteil (32) verbunden ist, und
- einen am Fügeflansch (24) angeordneten und sich entlang der Längsachse (L) erstreckenden Vorsprung (26), wobei
- die Sensoraufnahmen unter Ausbildung eines Freiraums zumindest teilweise beabstandet vom Verkleidungsbauteil im Bereich einer der Durchgangsöffnungen angeordnet sind, und
- das Füll- und Befestigungsmittel zum Auffüllen des Freiraums und zum Befestigen der Sensoraufnahmen am Verkleidungsbauteil.

Die technischen Effekte und Vorteile, die sich mit dem vorschlagsgemäßen Verkleidungsbauteil erreichen lassen, entsprechen denjenigen, die für die vorliegende Sensoraufnahme erörtert worden sind. Zusammenfassend sei darauf hingewiesen, dass aufgrund der vorschlagsgemäßen Gestaltung der Sensoraufnahme eine besonders gleichmäßige Verteilung des Füll- und Befestigungsmittels erreicht werden kann, so dass die Befestigung der Sensoraufnahme am Verkleidungsbauteil hohe Abzugskräfte bereitstellt. Weiterhin wird mit der vorschlagsgemäßen Gestaltung der Sensoraufnahme verhindert, dass das Füll- und Befestigungsmittel in den Hohlraum der Sensoraufnahme gelangen und dort die Funktionsfähigkeit des Sensors beeinträchtigen kann.

Bei einer weiteren Ausbildung ist vorgesehen, dass das Verkleidungsbauteil eine Wölbung aufweist und die Durchgangsöffnungen im Bereich der Wölbung angeordnet sind. Aufgrund der Möglichkeit, die Sensoraufnahme unter Ausbildung eines Freiraums beabstandet vom Verkleidungsbauteil an diesem zu befestigen, können die Sensoraufnahme und folglich der Sensor mit der gewünschten Ausrichtung in Bezug auf das Verkleidungsbauteil an diesem auch im Bereich der Wölbungen befestigt werden. Die oben genannten Vorteile lassen sich auch im Bereich der Wölbungen realisieren. Zudem müssen die Sensoraufnahme und insbesondere der Fügeflansch nicht individuell an jede Wölbung des Verkleidungsbauteils angepasst werden.

Eine fortentwickelte Ausbildung gibt vor, dass das Füll- und Befestigungsmittel als ein Klebstoff ausgebildet ist, der unter Einwirkung einer elektromagnetischen Strahlung aushärtbar ist. Hierdurch lässt sich der Fertigungsprozess einfach gestalten, da die zum Erzeugen der elektromagnetischen Strahlung benötigte Strahlenquelle genau dann eingeschaltet werden kann, wenn sich die Sensoraufnahme in der gewünschten Position gegenüber dem Verkleidungsbauteil befindet und die gewünschte Ausrichtung erreicht hat.

Nach Maßgabe einer fortentwickelten Ausbildung ist der Klebstoff unter Einwirkung einer elektromagnetischen Strahlung einer Wellenlänge zwischen 350 nm und 450 nm aushärtbar. Die Wellenlänge von zwischen 350 nm und 450 nm erzeugt für das menschliche Auge sichtbares Licht mit einer violett-blauen Farbe. Hierdurch kann einerseits die Funktionsfähigkeit der Strahlenquelle ohne weiteres festgestellt werden, andererseits enthält die elektromagnetische Strahlung in diesem Wellenlängenbereich ausreichend Strahlungsenergie, um das Aushärten des Füll- und Befestigungsmittels auszulösen.

Beispielhafte Ausführungsformen der Erfindung werden im Folgenden unter Bezugnahme auf die beigefügten Zeichnungen näher erläutert. Es zeigen
- Figur 1A: eine erfindungsgemäße Sensoraufnahme anhand einer prinzipiellen Schnittdarstellung,
- Figur 1B: die in Figur 1A gezeigte Sensoraufnahme anhand einer perspektivischen Darstellung,
- Figur 1C: eine vergrößerte Darstellung des in Figur 1A gekennzeichneten Bereichs X, und
- Figur 2: die in den Figuren 1A bis 1C dargestellte Sensoraufnahme, die an einem Verkleidungsbauteil befestigt ist.

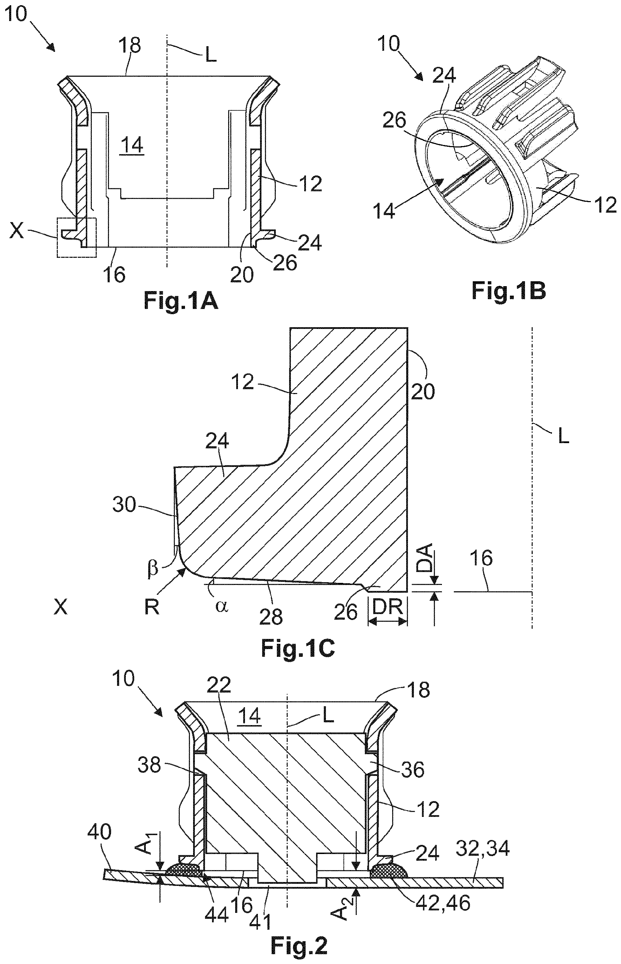

In Figur 1A ist ein Ausführungsbeispiel einer erfindungsgemäßen Sensoraufnahme 10 anhand einer prinzipiellen Schnittdarstellung gezeigt. Die Sensoraufnahme 10 umfasst eine Wandung 12, welche einen Hohlraum 14 umschließt und eine Längsachse L der Sensoraufnahme 10 definiert. Der Hohlraum 14 weist eine erste Öffnung 16 und eine zweite Öffnung 18 auf. Sowohl die erste Öffnung 16 als auch die zweite Öffnung 18 begrenzen die Sensoraufnahme 10 in axialer Richtung.

Wie insbesondere aus der Figur 1B hervorgeht, welche die in Figur 1A gezeigte Sensoraufnahme 10 anhand einer perspektivischen Darstellung zeigt, ist die Sensoraufnahme 10 im Wesentlichen rohrförmig, so dass der Hohlraum 14 eine in etwa zylindrische Form aufweist und eine Innenfläche 20 bildet.

Zur zweiten Öffnung 18 hin erweitert sich der Hohlraum 14, so dass ein Sensor 22 (siehe Figur 2) über die zweite Öffnung 18 besonders einfach in den Hohlraum 14 eingebracht werden kann, wozu der Sensor 22 entlang der Längsachse L des der Sensoraufnahme 10 bewegt wird.

Im Bereich der ersten Öffnung 16 weist die Sensoraufnahme 10 einen Fügeflansch 24 auf, der in radialer Richtung, also senkrecht zur Längsachse L, über die Seitenwand hervorsteht. Ausgehend vom Fügeflansch 24 erstreckt sich ein Vorsprung 26 entlang der Längsachse L der Sensoraufnahme 10 zur ersten Öffnung 16 hin. In Figur 1C ist der in Figur 1A gekennzeichnete Bereich nicht maßstabsgerecht und vergrößert dargestellt. Man erkennt, dass die Wandung 12, der Fügeflansch 24 und der Vorsprung 26 als ein einteiliges Bauteil ausgestaltet sind und der Fügeflansch 24 und der Vorsprung 26 von der Wandung 12 gebildet werden. Die von der Wandung 12 gebildete Innenfläche 20 verläuft durchgehend bis zur ersten Öffnung 16 und weist keine Stufen oder geneigten Abschnitte auf. Insofern fluchten der Fügeflansch 24 und der Vorsprung 26 mit der Innenfläche 20 entlang der Längsachse L. Wie insbesondere aus der Figur 1B erkennbar, sind der Fügeflansch 24 und der Vorsprung 26 umlaufend ausgebildet und weisen daher keine Unterbrechungen auf.

Wie in Figur 1C gezeigt, steht der Vorsprung 26 mit einer Axialdistanz DA vom Fügeflansch 24 hervor. Die Axialdistanz DA beträgt zwischen 0,05 mm und 0,5 mm. Weiterhin erstreckt sich der Vorsprung 26 ausgehend von der Innenfläche 20 in radialer Richtung um eine Radialdistanz DR, welche zwischen 0,3 mm und 0,7 mm beträgt. Der Fügeflansch 24 weist eine zur ersten Öffnung 16 hinweisende Stirnfläche 28 auf, die gegenüber einer senkrecht zur Längsachse L verlaufenden Ebene geneigt ist. Die Stirnfläche 28 schließt folglich einen Stirnflächenwinkel α mit dieser Ebene ein, der zwischen 1° und 7° und beispielsweise 4° beträgt. Der Stirnflächenwinkel α ist dabei von der ersten Öffnung 16 wegweisend ausgerichtet, so dass der Abstand der Stirnfläche 28 zur ersten Öffnung 16 radial nach außen zunimmt.

Darüber hinaus weist der Fügeflansch 24 eine Außenfläche 30 auf, die gegenüber der Längsachse L um einen Außenflächenwinkel β geneigt ist. Dabei ist die Neigung so ausgerichtet, dass sich der Fügeflansch 24 zur ersten Öffnung 16 hin an der Außenfläche 30 verjüngt. Der Außenflächenwinkel β beträgt zwischen 1° und 5°, beispielsweise 3°.

Die Außenfläche 30 und die Stirnfläche 28 gehen mit einem Radius R ineinander über, welcher im dargestellten Beispiel zwischen 4 mm und 6 mm, beispielsweise 5 mm beträgt.

Die Sensoraufnahme 10 ist aus einem Kunststoff gefertigt, wodurch es ermöglicht wird, die Sensoraufnahme 10 im Spritzgussverfahren herzustellen. Mittels des Spritzgussverfahrens kann eine große Anzahl von Sensoraufnahmen 10 innerhalb einer kurzen Zeit zu geringen Kosten bereitgestellt werden. Der verwendete Kunststoff ist für eine elektromagnetische Strahlung, die eine Wellenlänge von zwischen 350 nm und 450 nm aufweist, durchlässig.

In Figur 2 ist die in den Figuren 1A bis 1C gezeigte Sensoraufnahme 10 an einem Verkleidungsbauteil 32 eines Kraftfahrzeugs 34 befestigt dargestellt. Das Verkleidungsbauteil 32 begrenzt das Kraftfahrzeug 34 und bildet daher beispielsweise das maximale vordere, seitliche oder hintere Ende des Kraftfahrzeugs 34.

Der Sensor 22 ist in den Hohlraum 14 eingebracht und formschlüssig an der Sensoraufnahme 10 befestigt. Hierzu weist der Sensor 22 radialen Erweiterungen 36 auf, die in Ausnehmungen 38 der Wandung 12 der Sensoraufnahme 10 eingreifen. Die Sensoraufnahme 10 ist so positioniert, dass der Sensor 22 konzentrisch zu einer Durchgangsöffnung 41 des Verkleidungsbauteils 32 angeordnet ist, wodurch der Sensor 22 mit der Umgebung des Verkleidungsbauteils 32 bzw. des Kraftfahrzeugs 34 in Wechselwirkung treten kann. Weiterhin ist aus Figur 2 ersichtlich, dass das Verkleidungsbauteil 32 eine Wölbung 40 aufweist.

Zum Befestigen der Sensoraufnahme 10 an dem Verkleidungsbauteil 32 wird wie folgt vorgegangen: Zunächst wird ein im Ausgangszustand flüssiges oder viskoses Füll- und Befestigungsmittel 42 ringförmig so um die Durchgangsöffnung 41 auf das Verkleidungsbauteil 32 aufgetragen, dass sich das Füll- und Befestigungsmittel 42 bei konzentrischer Ausrichtung der Sensoraufnahme 10 zur Durchgangsöffnung 41 radial außerhalb des Hohlraums 14 und annäherungsweise innerhalb der vom Fügeflansch 24 überstrichenen Fläche befindet. Anschließend wird die Sensoraufnahme 10 mit dem an ihr befestigten Sensor 22 mit einer Bewegung entlang der Längsachse L in eine Position gebracht, in welcher zwischen dem Verkleidungsbauteil 32 und der Sensoraufnahme 10 ein Freiraum 44 verbleibt. Hierzu kann die Sensoraufnahme 10 mit einer hier nicht dargestellten Positionierungs- und Ausrichtungsvorrichtung in die gewünschte Position gebracht werden. In dieser Position tritt die Sensoraufnahme 10 mit dem Füll- und Befestigungsmittel 42, aber nicht direkt mit dem Verkleidungsbauteil 32 in Kontakt, so dass der Freiraum 44 zwischen dem Verkleidungsbauteil 32 vom Füll- und Befestigungsmittel 42 ausgefüllt und überbrückt wird.

Aufgrund der vorschlagsgemäßen Ausgestaltung der Sensoraufnahme 10 und insbesondere aufgrund des Vorsprungs 26 und der Ausgestaltung des Fügeflansches 24 wird beim Kontakt der Sensoraufnahme 10 mit dem Füll- und Befestigungsmittel 42 einerseits verhindert, dass das Füll- und Befestigungsmittel 42 in den Hohlraum 14 der Sensoraufnahme 10 gelangen kann und dort die Funktionsfähigkeit des Sensors 22 beeinträchtigen könnte. Andererseits bewirkt die erfindungsgemäße Ausgestaltung der Sensoraufnahme 10, dass das Füll- und Befestigungsmittel 42 gleichmäßig verteilt wird und somit eine große Kontaktfläche zwischen dem Verkleidungsbauteil 32 und insbesondere dem Fügeflansch 24 und der Sensoraufnahme 10 geschaffen wird.

Das Füll- und Befestigungsmittel 42 kann als ein Klebstoff 46 ausgebildet werden, welcher unter Einwirkung einer elektromagnetischen Strahlung aushärtbar ist. Zum Bereitstellen einer elektromagnetischen Strahlung kann eine hier nicht dargestellte Strahlenquelle verwendet werden. Die Strahlenquelle kann beispielsweise eine elektromagnetische Strahlung mit einer Wellenlänge von zwischen 350 nm und 450 nm, beispielsweise 400 nm, bereitstellen. Der Kunststoff, aus dem die Sensoraufnahme 10 gefertigt ist, ist idealer Weise in diesem Wellenlängenbereich durchlässig, so dass die elektromagnetische Strahlung ohne Abschattung auf einen Großteil der Oberfläche des Klebstoffs 46 auftreffen und diesen gleichmäßig aushärten kann.

Wie erwähnt, weist das Verkleidungsbauteil 32 eine Wölbung 40 auf. Folglich sind der erste Abstand A₁ und der zweite Abstand A₂ zwischen dem Verkleidungsbauteil 32 und der Sensoraufnahme 10 nicht gleich. Diese Unterschiede können mit dem Füll- und Befestigungsmittel 42 ausgeglichen werden, so dass es nicht notwendig ist, die Sensoraufnahme 10 und insbesondere den Fügeflansch 24 an die Wölbung 40 des Verkleidungsbauteils 32 anzupassen.

### Bezugszeichenliste

- 10: Sensoraufnahme
- 12: Wandung
- 14: Hohlraum
- 16: erste Öffnung
- 18: zweite Öffnung
- 20: Innenfläche
- 22: Sensor
- 24: Fügeflansch
- 26: Vorsprung
- 28: Stirnfläche
- 30: Außenfläche
- 32: Verkleidungsbauteil
- 34: Kraftfahrzeug
- 36: Erweiterung
- 38: Ausnehmung
- 40: Wölbung
- 41: Durchgangsöffnung
- 42: Füll- und Befestigungsmittel
- 44: Freiraum
- 46: Klebstoff

- A₁, A₂: Abstand
- DA: Axialabstand
- DR: Radialabstand
- L: Längsachse
- R: Radius

- α: Stirnflächenwinkel
- β: Außenflächenwinkel

## Patentansprüche

1. Sensoraufnahme (10) zum Aufnehmen eines Sensors (22) eines Kraftfahrzeugs (34), umfassend
- eine Wandung (12), welche einen Hohlraum (14) mit einer ersten Öffnung (16) und einer zweiten Öffnung (18) umschließt und welche eine Längsachse (L) definiert, wobei der Sensor (22) mittels einer Bewegung entlang der Längsachse (L) durch die erste Öffnung (16) und/oder durch die zweite Öffnung (18) in den Hohlraum (14) einbringbar ist,
- einen im Bereich der ersten Öffnung (16) angeordneten Fügeflansch (24), mit welchem die Sensoraufnahme (10) mit einem Verkleidungsbauteil (32) des Kraftfahrzeugs (34) unter Ausbildung eines Freiraums (44) zwischen der Sensoraufnahme (10) und dem Verkleidungsbauteil (32) verbindbar ist, wobei die Sensoraufnahme (10) mittels eines den Freiraum (44) ausfüllenden Füll- und Befestigungsmittels (42) mit dem Verkleidungsbauteil (32) verbindbar ist, und
- einen am Fügeflansch (24) angeordneten und sich entlang der Längsachse (L) erstreckenden Vorsprung (26), wobei
- der Fügeflansch (24) und der Vorsprung (26) derart ausgebildet sind, dass das Füll- und Befestigungsmittel (42) beim Verbinden der Sensoraufnahme (10) mit dem Verkleidungsbauteil (32) vom Hohlraum (14) weg verdrängt wird,
**dadurch gekennzeichnet, dass** der Fügeflansch (24) eine zur ersten Öffnung (16) hinweisende Stirnfläche (28) aufweist, welche um einen Stirnflächenwinkel (α) gegenüber einer senkrecht zur Längsachse (L) verlaufenden Ebene geneigt ist, wobei der Stirnflächenwinkel (α) von der ersten Öffnung (16) weg weist und zwischen 1° und 7° und insbesondere zwischen 3° und 5° beträgt und/oder
**dadurch gekennzeichnet, dass** der Fügeflansch (24) eine Außenfläche (30) aufweist, welche gegenüber der Längsachse (L) um einen Außenflächenwinkel (β) geneigt ist, wobei der Außenflächenwinkel (β) zwischen 1° und 5° beträgt und eine Verjüngung des Fügeflansches (24) zur ersten Öffnung (16) hin bewirkt.

2. Sensoraufnahme (10) nach Anspruch 1,
**dadurch gekennzeichnet, dass** die Wandung (12) eine Innenfläche (20) bildet und der Fügeflansch (24) mit der Innenfläche (20) fluchtet.

3. Sensoraufnahme (10) nach Anspruch 2,
**dadurch gekennzeichnet, dass** der Vorsprung (26) mit der Innenfläche (20) fluchtet.

4. Sensoraufnahme (10) nach einem der vorherigen Ansprüche,
**dadurch gekennzeichnet, dass** der Fügeflansch (24) und der Vorsprung (26) umlaufend ausgebildet sind.

5. Sensoraufnahme (10) nach einem der vorherigen Ansprüche,
**dadurch gekennzeichnet, dass** der Fügeflansch (24) und der Vorsprung (26) einteilig mit der Wandung (12) ausgebildet sind.

6. Sensoraufnahme (10) nach einem der vorherigen Ansprüche,
**dadurch gekennzeichnet, dass** der Vorsprung (26) mit einer Axialdistanz (DA) vom Fügeflansch (24) hervorsteht, welche zwischen 0,05 mm und 0,5 mm beträgt.

7. Sensoraufnahme (10) nach einem der Ansprüche 2 bis 6,
**dadurch gekennzeichnet, dass** sich der Vorsprung (26) ausgehend von der Innenfläche (20) um eine Radialdistanz (DR) erstreckt, welche zwischen 0,3 mm und 0,7 mm beträgt.

8. Sensoraufnahme (10) nach einem der vorherigen Ansprüche,
**dadurch gekennzeichnet, dass** die Sensoraufnahme (10) aus einem Kunststoff gefertigt ist, welcher für elektromagnetische Strahlung einer Wellenlänge zwischen 350 nm und 450 nm durchlässig ist.

9. Verkleidungsbauteil (32) eines Kraftfahrzeugs (34), umfassend
- eine oder mehrere Durchgangsöffnungen (41),
- eine oder mehrere Sensoraufnahmen (10) zum Aufnehmen eines Sensors (22) des Kraftfahrzeugs (34) umfassend
∘ eine Wandung (12), welche einen Hohlraum (14) mit einer ersten Öffnung (16) und einer zweiten Öffnung (18) umschließt und welche eine Längsachse (L) definiert, wobei
der Sensor (22) mittels einer Bewegung entlang der Längsachse (L) durch die erste Öffnung (16) und/oder durch die zweite Öffnung (18) in den Hohlraum (14) einbringbar ist,
∘ einen im Bereich der ersten Öffnung (16) angeordneten Fügeflansch (24), mit welchem die Sensoraufnahme (10) mit einem Verkleidungsbauteil (32) des Kraftfahrzeugs (34) unter Ausbildung eines Freiraums (44) zwischen der Sensoraufnahme (10) und dem Verkleidungsbauteil (32) verbunden ist, wobei die Sensoraufnahme (10) mittels eines den Freiraum (44) ausfüllenden Füll- und Befestigungsmittels (42) mit dem Verkleidungsbauteil (32) verbunden ist, und
∘ einen am Fügeflansch (24) angeordneten und sich entlang der Längsachse (L) erstreckenden Vorsprung (26), wobei
- die Sensoraufnahmen (10) unter Ausbildung eines Freiraums (44) zumindest teilweise beabstandet vom Verkleidungsbauteil (32) im Bereich einer der Durchgangsöffnungen (41) angeordnet sind, und
- das Füll- und Befestigungsmittel (42) zum Auffüllen des Freiraums (44) und zum Befestigen der Sensoraufnahmen (10) am Verkleidungsbauteil (32), wobei der Fügeflansch (24) und der Vorsprung (26) derart ausgebildet sind, dass das Füll- und Befestigungsmittel (42) beim Verbinden der Sensoraufnahme (10) mit dem Verkleidungsbauteil (32) vom Hohlraum (14) weg verdrängt wird.

10. Verkleidungsbauteil (32) nach Anspruch 9,
**dadurch gekennzeichnet, dass** das Verkleidungsbauteil (32) eine Wölbung (40) aufweist und die Durchgangsöffnungen (41) im Bereich der Wölbung (40) angeordnet sind.

11. Verkleidungsbauteil (32) nach Anspruch 10,
**dadurch gekennzeichnet, dass**
- das Füll- und Befestigungsmittel (42) als ein Klebstoff (46) ausgebildet ist, der unter Einwirkung einer elektromagnetischen Strahlung aushärtbar ist.

12. Verkleidungsbauteil (32) nach Anspruch 11,
**dadurch gekennzeichnet, dass**
- der Klebstoff (46) unter Einwirkung einer elektromagnetischen Strahlung einer Wellenlänge zwischen 350 nm und 450 nm aushärtbar ist und
- die Sensoraufnahme (10) aus einem Kunststoff gefertigt ist, welcher für elektromagnetische Strahlung einer Wellenlänge zwischen 350 nm und 450 nm durchlässig ist.

13. Verkleidungsbauteil nach einem der Ansprüche 9 bis 12,
**dadurch gekennzeichnet, dass** der Vorsprung (26) mit einer Axialdistanz (DA) vom Fügeflansch (24) hervorsteht, welche zwischen 0,05 mm und 0,5 mm beträgt und
sich der Vorsprung (26) ausgehend von der Innenfläche (20) um eine Radialdistanz (DR) erstreckt, welche zwischen 0,3 mm und 0,7 mm beträgt.

14. Verkleidungsbauteil nach einem der Ansprüche 9 bis 13, **dadurch gekennzeichnet, dass** der Fügeflansch (24) eine zur ersten Öffnung (16) hinweisende Stirnfläche (28) aufweist, welche um einen Stirnflächenwinkel (α) gegenüber einer senkrecht zur Längsachse (L) verlaufenden Ebene geneigt ist, wobei der Stirnflächenwinkel (α) von der ersten Öffnung (16) weg weist und zwischen 1° und 7° und insbesondere zwischen 3° und 5° beträgt.

15. Verkleidungsbauteil nach einem der Ansprüche 9 bis 14,
**dadurch gekennzeichnet, dass** der Fügeflansch (24) eine Außenfläche (30) aufweist, welche gegenüber der Längsachse (L) um einen Außenflächenwinkel (β) geneigt ist, wobei der Außenflächenwinkel (β) zwischen 1° und 5° beträgt und eine Verjüngung des Fügeflansches (24) zur ersten Öffnung (16) hin bewirkt.

## Claims

1. Sensor mounting (10) for holding a sensor (22) of a motor vehicle (34), comprising
- a walling (12) that encloses a cavity (14) with a first opening (16) and a second opening (18) and which defines a longitudinal axis (L), wherein the sensor (22) can be introduced into the cavity (14) by moving it along the longitudinal axis (L) through the first opening (16) and/or through the second opening (18),
- a joining flange (24) disposed in the region of the first opening (16) with which the sensor mounting (10) can be connected to a cladding component (32) of the motor vehicle (34), thereby forming an open space (44) between the sensor mounting (10) and the cladding component (32), wherein
the sensor mounting (10) can be connected to the cladding component (32) by means of a filling and fixing agent (42) that fills the open space (44), and
- a protuberance (26) disposed on the joining flange (24) and extending along the longitudinal axis (L), wherein
- the joining flange (24) and the protuberance (26) are implemented such that, when the sensor mounting (10) is connected to the cladding component (32), the filling and fixing agent (42) is forced away from the cavity (14),
**characterized in that** the joining flange (24) comprises an end face (28) that faces the first opening (16) and that is inclined at an end face angle (α) towards a plane extending vertically to the longitudinal axis (L), wherein the end face angle (α) faces away from the first opening (16) and is set at between 1° and 7° and, in particular, between 3° and 5°, and/or
**characterized in that** the joining flange (24) comprises an outer surface (30) that is inclined at an outer surface angle (β) relative to the longitudinal axis (L), wherein the outer surface angle (β) is set at between 1° and 5° and effects a tapering of the joining flange (24) in the direction of the first opening (16).

2. Sensor mounting (10) in accordance with claim 1,
**characterized in that** the walling (12) forms an inner surface (20) and **in that** the joining flange (24) is aligned with the inner surface (20).

3. Sensor mounting (10) in accordance with claim 2,
**characterized in that** the protuberance (26) is aligned with the inner surface (20).

4. Sensor mounting (10) in accordance with any of the preceding claims, **characterized in that** the joining flange (24) and the protuberance (26) are implemented circumferentially.

5. Sensor mounting (10) in accordance with any of the preceding claims, **characterized in that** the joining flange (24) and the protuberance (26) are implemented in one piece together with the walling (12).

6. Sensor mounting (10) in accordance with any of the preceding claims, **characterized in that** protuberance (26) protrudes from the joining flange (24) at an axial distance (DA) that lies between 0.05 mm and 0.5 mm.

7. Sensor mounting (10) in accordance with any of claims 2 to 6,
**characterized in that** the protuberance (26), starting from the inner surface (20), extends at a radial distance (DR) that lies between 0.3 mm and 0.7 mm.

8. Sensor mounting (10) in accordance with any of the preceding claims, **characterized in that** the sensor mounting (10) is made of a plastic material that is permeable for electromagnetic radiation that has a wave length of between 350 nm and 450 nm.

9. Cladding component (32) for a motor vehicle (34) comprising
- one or more through openings (41),
- one or more sensor mounting (10) for holding a sensor (22) of a motor vehicle (34) comprising
• a walling (12) that encloses a cavity (14) with a first opening (16) and a second opening (18) and which defines a longitudinal axis (L), wherein the sensor (22) can be introduced into the cavity (14) by moving it along the longitudinal axis (L) through the first opening (16) and/or through the second opening (18),
• a joining flange (24) disposed in the region of the first opening (16) with which the sensor mounting (10) is connected to a cladding component (32) of the motor vehicle (34), thereby forming an open space (44) between the sensor mounting (10) and the cladding component (32), wherein the sensor mountings (10) are connected to the cladding component (32) by means of a filling and fixing agent (42) that fills the open space (44), and
• a protuberance (26) disposed on the joining flange (24) and extending along the longitudinal axis (L), wherein
- the sensor mountings (10) are arranged at least partially at a distance to the cladding component (32) in the region of one of the through openings (41), and
- a filling and fixing agent (42) for filling the open space (44) and for attaching the sensor mountings (10) to the cladding component (32),
wherein the joining flange (24) and the protuberance (26) are implemented such that, when the sensor mounting (10) is connected to the cladding component (32), the filling and fixing agent (42) is forced away from the cavity (14).

10. Cladding component (32) in accordance with claim 9,
**characterized in that** the cladding component (32) comprises a convexity (40) and **in that** the through openings (41) are disposed in the region of the convexity (40).

11. Cladding component (32) in accordance with claim 10,
**characterized in that**
- the filling and fixing agent (42) comprises an adhesive (46) which can be hardened under the effect of an electromagnetic radiation.

12. Cladding component (32) in accordance with claim 11,
**characterized in that**
- the adhesive (46) can be hardened under the effect of an electromagnetic radiation with a wave length of between 350 nm and 450 nm and
- the sensor mounting (10) is made of a plastic material that is permeable for an electromagnetic radiation with a wave length of between 350 nm and 450 nm.

13. Cladding component in accordance with any of claims 9 to 12,
**characterized in that** the protuberance (26) protrudes from the joining flange (24) at an axial distance (DA) that lies between 0.05 mm and 0.5 mm and
**in that** the protuberance (26), starting from the inner surface (20), extends at a radial distance (DR) that lies between 0.3 mm and 0.7 mm.

14. Cladding component in accordance with any of claims 9 to 13,
**characterized in that** the joining flange (24) comprises an end face (28) that faces the first opening (16) and that is inclined at an end face angle (α) towards a plane extending vertically to the longitudinal axis (L), wherein the end face angle (α) faces away from the first opening (16) and is set at between 1° and 7° and, in particular, between 3° and 5°.

15. Cladding component in accordance with any of claims 9 to 14,
**characterized in that** the joining flange (24) comprises an outer surface (30) that is inclined at an outer surface angle (β) relative to the longitudinal axis (L), wherein the outer surface angle (β) is set at between 1° and 5° and effects a tapering of the joining flange (24) in the direction of the first opening (16).

## Revendications

1. Support de capteur (10) pour recevoir un capteur (22) de véhicule automobile (34) comprenant :
- une paroi (12) entourant une cavité (14) avec un premier orifice (16) et un second orifice (18) et définissant un axe longitudinal (L),
dans lequel
le capteur (22) se met dans la cavité (14) par un mouvement selon l'axe longitudinal (L) à travers le premier orifice (16) et/ou le second orifice (18),
- une bride d'assemblage (24) dans la zone du premier orifice (16) qui permet de relier le support de capteur (10) à un composant d'habillage (32) du véhicule automobile (34) en laissant un espace libre (44) entre le support de capteur (10) et le composant d'habillage (32), le support de capteur (10) étant relié au composant d'habillage (32) par un moyen de remplissage et de fixation (42) remplissant l'espace libre (44), et
- un relief (26) sur la bride d'assemblage (24), s'étendant selon l'axe longitudinal (L),
- la bride d'assemblage (24) et le relief (26) étant réalisés de façon que le moyen de remplissage et de fixation (42) soit refoulé de la cavité (14) lors de la réunion du support de capteur (10) au composant d'habillage (32),
support **caractérisé en ce que**
la bride d'assemblage (24) comporte une première surface frontale (28) dirigée vers le premier orifice (16) et inclinée par rapport à un plan perpendiculaire à l'axe longitudinal (L), selon un angle de surface frontale (α),
cet angle de surface frontale (α) s'ouvrant à partir du premier orifice (16), étant compris entre 1° et 7° et notamment entre 3° et 5°, et/ou support **caractérisé en ce que**
la bride d'assemblage (24) a une surface extérieure (30) inclinée par rapport à l'axe longitudinal (L) d'un angle de surface extérieure (β), cet angle de surface extérieure (β) étant compris entre 1° et 5° et faisant diminuer la bride d'assemblage (24) vers le premier orifice (16).

2. Support de capteur (10) selon la revendication 1,
**caractérisé en ce que**
la paroi (12) forme une surface intérieure (20) sur laquelle la bride d'assemblage (24) est alignée.

3. Support de capteur (10) selon la revendication 2,
**caractérisé en ce que**
le relief (26) est aligné sur la surface intérieure (20).

4. Support de capteur (10) selon l'une des revendications précédentes, **caractérisé en ce que**
la bride d'assemblage (24) et le relief (26) sont périphériques.

5. Support de capteur (10) selon l'une des revendications précédentes, **caractérisé en ce que**
la bride d'assemblage (24) et le relief (26) sont réalisés en une seule pièce avec la paroi (12).

6. Support de capteur (10) selon l'une des revendications précédentes, **caractérisé en ce que**
le relief (26) est en saillie par rapport à la bride d'assemblage (24) d'une distance axiale (DA) comprise entre 0,05 mm et 0,5 mm.

7. Support de capteur (10) selon l'une des revendications 2 à 6, **caractérisé en ce que**
le relief (26) s'étend à partir de la surface intérieure (20) selon une distance radiale (DR) comprise entre 0,3 mm et 0,7 mm.

8. Support de capteur (10) selon l'une des revendications précédentes, **caractérisé en ce que**
le support de capteur (10) est réalisé en une matière synthétique transparente à un rayonnement électromagnétique d'une longueur d'onde comprise entre 350 nm et 450 nm.

9. Composant d'habillage (32) d'un véhicule automobile (34) comprenant :
- un ou plusieurs orifices traversants (41),
- un ou plusieurs supports de capteur (10) pour recevoir un capteur (22) de véhicule automobile (34) ayant,
* une paroi (12) entourant une cavité (14) ayant un premier orifice (16) et un second orifice (18) et définissant un axe longitudinal (L),
le capteur (22) se logeant dans la cavité (14) par un mouvement selon l'axe longitudinal (L) en passant par le premier orifice (16) et/ou le second orifice (18),
* une bride d'assemblage (24) du premier orifice (16) qui relie le support de capteur (10) à un composant d'habillage (32) de véhicule automobile (34) en laissant un espace libre (44) entre le support de capteur (10) et le composant d'habillage (32),
le support de capteur (10) étant relié au composant d'assemblage (32) par un agent de remplissage et de fixation (42) remplissant l'espace libre (44), et
* un relief (26) sur la bride d'assemblage (24) s'étendant selon l'axe longitudinal (L),
- le support de capteur (10) étant au moins partiellement écarté du composant d'habillage (32) en laissant un espace libre (44), dans la région de l'un des orifices traversants (41), et
l'agent de remplissage et de fixation (42) pour remplir l'espace libre (44) et pour fixer le support de capteur (10) au composant d'habillage (32), dans lequel
la bride d'assemblage (24) et le relief (26) sont réalisés de façon que le moyen de remplissage et de fixation (42) soit refoulé de la cavité (14) lors de la réunion du support de capteur (10) au composant d'habillage (32).

10. Composant d'habillage (32) selon la revendication 9,
**caractérisé en ce que**
le composant d'habillage (32) a une forme bombée (40) et les orifices traversants (41) sont dans la région de la partie bombée (40).

11. Composant d'habillage (32) selon la revendication 10,
**caractérisé en ce que**
l'agent de remplissage et de fixation (42) est un adhésif (46) qui durcit sous l'effet du rayonnement électromagnétique.

12. Composant d'habillage (32) selon la revendication 11,
**caractérisé en ce que**
- l'adhésif (46) durcit sous l'action d'un rayonnement électromagnétique de longueur d'onde comprise entre 350 nm et 450 nm, et
- le support de capteur (10) est réalisé en une matière synthétique transparente à un rayonnement électromagnétique ayant une longueur d'onde comprise entre 350 nm et 450 nm.

13. Composant d'habillage selon l'une des revendications 9 à 12, **caractérisé en ce que**
- le relief (26) dépasse de la bride d'assemblage (24) d'une distance axiale (DA) comprise entre 0,05 mm et 0,5 mm, et
- partant de la surface intérieure (20), le relief (26) s'étend sur une distance radiale (DR) comprise entre 0,3 mm et 0,7 mm.

14. Composant d'habillage selon l'une des revendications 9 à 13, **caractérisé en ce que**
la bride d'assemblage (24) a une surface frontale (28) tournée vers le premier orifice (16) et inclinée d'un angle de surface frontale (α) par rapport à un plan perpendiculaire à l'axe longitudinal (L), cet angle de surface frontale (α) étant issu du premier orifice (16) et compris entre 1° et 7°, notamment entre 3° et 5°.

15. Composant d'habillage selon l'une des revendications 9 à 14, **caractérisé en ce que**
la bride d'assemblage (24) a une surface extérieure (30) inclinée par rapport à l'axe longitudinal (L) d'une angle de surface extérieure (β), cet angle de surface extérieure (β) compris entre 1° et 5° et réduisant la bride d'assemblage (24) en direction du premier orifice (16).
